Europäisches Patentamt

European Patent Office

Office européen des brevets

(11) Publication number: **0 056 272**
**B1**

(12) **EUROPEAN PATENT SPECIFICATION**

(45) Date of publication of patent specification: **02.01.86**

(21) Application number: **82100141.9**

(22) Date of filing: **11.01.82**

(51) Int. Cl.⁴: **H 02 K 15/02, H 02 K 1/06**

(54) **Method for preparation of a laminated iron core and laminated iron core of an electric device.**

(30) Priority: **12.01.81 JP 3472/81**

(43) Date of publication of application:
**21.07.82 Bulletin 82/29**

(45) Publication of the grant of the patent:
**02.01.86 Bulletin 86/01**

(84) Designated Contracting States:
**BE DE FR SE**

(56) References cited:
**FR-A-1 404 138**
**US-A-3 783 318**

(73) Proprietor: **MITSUBISHI DENKI KABUSHIKI KAISHA**
**2-3, Marunouchi 2-chome Chiyoda-ku**
**Tokyo 100 (JP)**

(72) Inventor: **Shinryo, Yuko**
**11-18, Fujisaki 1-chome**
**Nishi-ku Fukuoka-shi Fukuoka-ken (JP)**
Inventor: **Yamamoto, Takashi**
**20-27, Shiroyamacho**
**Nagaseki-shi Nagaseki-ken (JP)**

(74) Representative: **Liesegang, Roland, Dr.-Ing.**
**Sckellstrasse 1**
**D-8000 München 80 (DE)**

## Description

The present invention relates to a method for preparation of a laminated iron core and to a laminated iron core of an electric device, in particular a rotary device like an electric motor or generator, in an improvement of utilization of a strip for iron cores, comprising the features according to the first part of claim 1.

A laminated iron core of a rotary electric device is formed by laminating a number of iron core plates obtained by stamping a strip for iron cores in a desired shape.

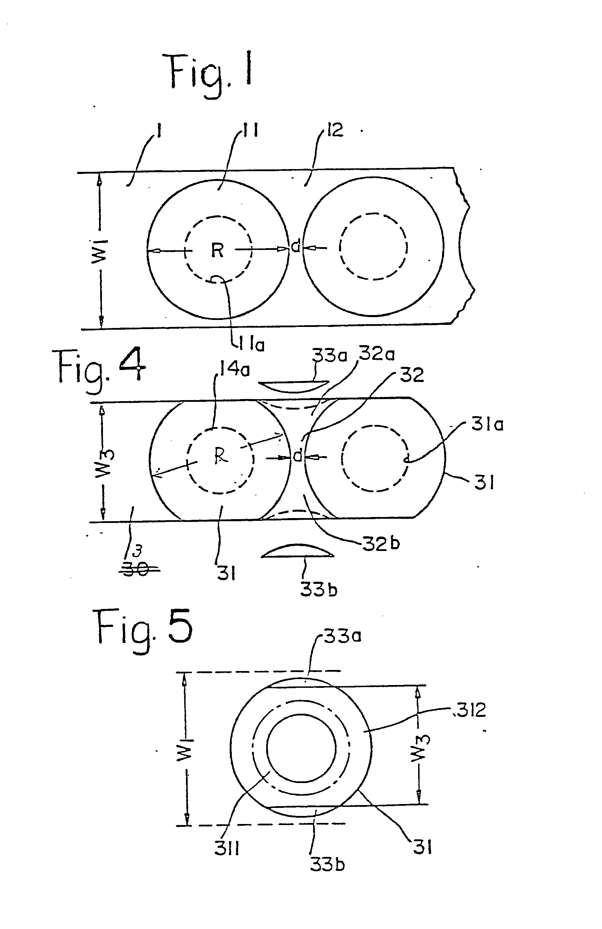

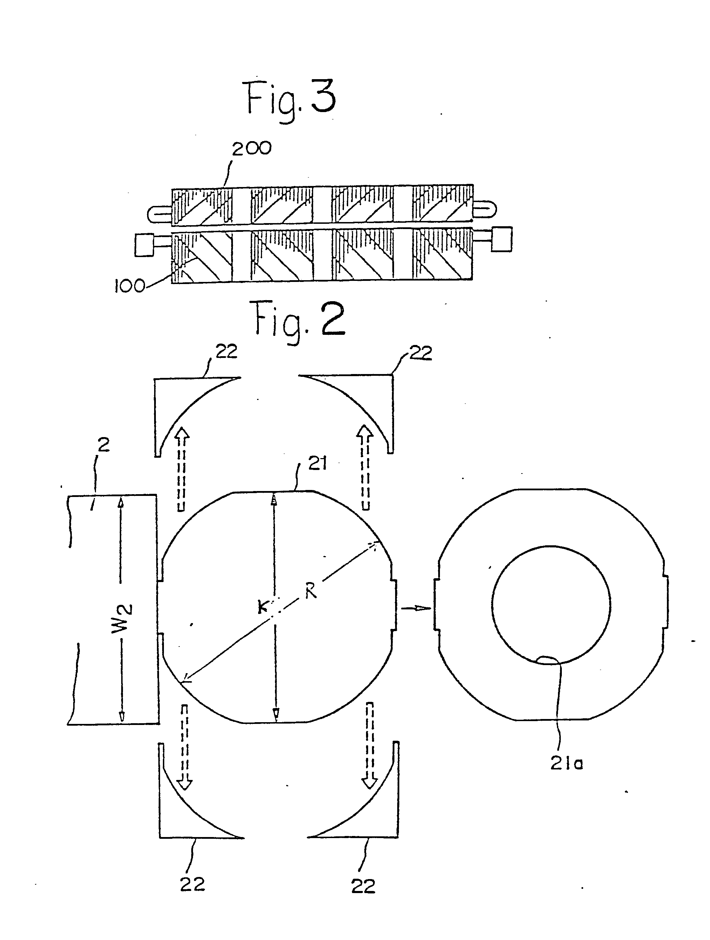

In a conventional method illustrated in figure 1, iron core discs 11 having an outer size R ($<W_1$) being the same as the outer size of a stator laminated iron core, are obtained by stamping the strip 1 for iron cores having a width $W_1$ at a desired stamping gap d and forming a shaft hole 11a at the center of each iron core disc in an annular form and further stamping the iron core discs to form rotor or stator slots (not shown) so as to separate them into smaller diameter ring plate and large diameter ring plate. The smaller diameter ring plates and the larger diameter ring plates are respectively laminated to prepare a rotor laminated iron core 100 and a stator laminated iron core 200 (fig. 3).

According to fig. 2 iron core discs 21 are obtained by stamping a strip for iron cores 2 having a width $W_2(=k)$ being smaller than the outer size R of the stator laminated iron core and each shaft hole 21a and the slots are formed in the same manner.

In accordance with the conventional methods to prepare iron core ring plates for the stator and rotor laminated iron cores by stamping iron core discs obtained by stamping a strip for iron cores in the outer size of the stator laminated iron core, excess fragments 12, 22 of the strip for iron cores formed between the stamped iron core discs are wasted without a reuse and accordingly, the efficiency for utilization of the strip for iron cores is disadvantageously inferior.

A method comprising the features of the first part of claim 1 is known from US—A—3,783,318. Whereas it can be taken therefrom, that the iron core discs in all embodiments should have straight edges nothing is said to add crescent-shaped pieces to those straight edges in order to achieve a circular plate. This is true in particular for the embodiments shown in figs. 4 to 6. It is explained in this connection in column 6, lines 37 to column 7, line 4 of document 1, that to achieve a substantially cylindrical iron core alternately lamination having straight edges should be arranged circumferentially offset to each other in a stack.

An object of the present invention is to overcome the aforementioned disadvantages of the conventional methods.

Another object of the present invention is to provide a method for preparing a laminated iron core of an electric device, for instance a rotary electric device, e.g. an electric motor or generator, and a laminated ion core in which the strip of iron cores in comparison with that of the conventional preparation are used with a remarkably higher efficiency.

The foregoing and other objects of the present invention have been obtained by the features of the characterizing portions of claim 1.

The invention may be carried into practice in various ways but certain specific embodiments will now be described by way of example only and with reference to the accompanying drawings, in which

fig. 1 and 2 are respectively schematic views for illustrating the conventional methods of preparing a laminated iron core;

fig. 3 is a sectional view of the laminated iron cores of a rotary electric device;

fig. 4 and 5 are respectively schematic views for illustrating one embodiment of the preparation and assembly of a laminated iron core according to the present invention; and

fig. 6 and 7 are respectively schematic views for illustrating another embodiment of the preparation and assembly of a laminated iron core according to the present invention.

One embodiment of the present invention will now be described at figs. 4 and 5.

In this embodiment, a strip for iron cores 3 having a width $W_3$ ($<R$) as shown in fig. 4 is used in the stamping of the strip to form iron core discs for laminated iron cores of a rotary electric device which include a stator laminated iron core having an outer diameter R. The strip for iron cores 3 is stamped to form the iron core discs 31 having a modified peripheral shape having a pair of straight edges in both sides (which is different from the complete shape of the stator laminated iron core) with each stamping gap d being the same as the conventional stamping gap as shown in fig. 1. That is, the strip is stamped to form the iron core discs 31 having a pair of straight edges at the position of $\frac{1}{2}W_3$ from the center of the circular disc having a diameter R symmetrically to the center line. At the same time for the stamping of the iron core discs 31 or after the stamping, crescent-shaped pieces 33a, 33b are obtained by stamping the excess fragments 32 of the strip 3 for iron cores which are formed by the stamping for the iron cores. The crescent-shaped pieces 33a, 33b are formed by stamping as shown by the dotted lines so as to include the side edge of the strip as the straight edge of each side parts 32a, 32b of the excess fragment 32 in the shape of

$$\rlap{)}(\cdot$$

Each shaft hole 31a shown in fig. 4 is formed by stamping each iron core disc 31 by the conventional manner and then, rotor slots and stator slots (not shown) are formed by stamping the iron core disc to separate it into a rotor iron ring plate 311 having a smaller diameter and a stator iron core ring plate 312 having a larger diameter. The stator iron core ring plates 312 and the crescent-shaped pieces 33a, 33b are assembled by the lamination. The assembly is shown in fig. 5. The crescent-shaped pieces 33a, 33b are fixed by fastening force after inserting into the laminated layers without a bonding.

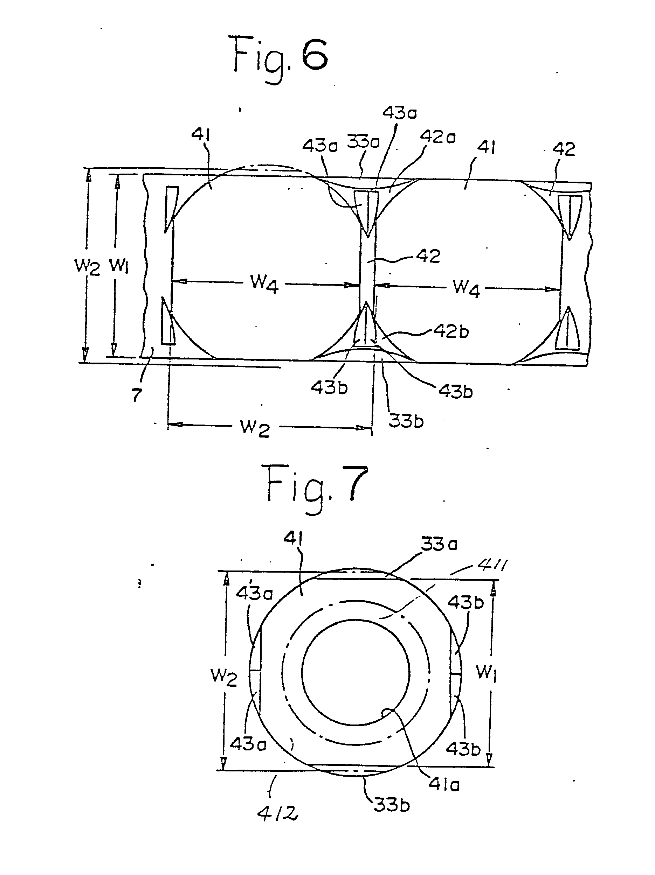

Fig. 6 shows the other embodiment of the present invention. In this embodiment, the strip is stamped to form iron core discs 41 having two pairs of four straight edges (two straight edges are further formed on the iron core disc 31 shown in fig. 4 at the adjacent sides) and both side parts 42a, 42b of excess fragments 42 are stamped to form crescent-shaped pieces 43a, 43a, 43b, 43b.

Each shaft hole 41a shown in fig. 7 is formed on each iron core disc 41 and rotor slots and stator slots are formed by stamping to separate it into a rotor iron core ring plate and a stator iron core ring plate. The stator iron core ring plates 412 and the crescent-shaped pieces 33a, 33b, 43a, 43a, 43b, 43b are assembled by the lamination in the same manner. The assembly is shown in fig. 7.

In this embodiment, the width W of the iron core disc (in the logitudinal direction) in the stamping to form the iron core disc 41 can be smaller than that of the iron core disc 11, 12 shown in fig. 1 and 2 and that of the iron core disc 31 shown in fig. 4. The half-crescent-shaped pieces 43a, 43a, 43b, 43b can be obtained by stamping the broad parts 42a, 42b of the excess fragment 42 in the form of each pair of half-crescent-shaped pieces having the common straight edge. Therefore, the efficiency of utilization of the strip for iron cores is further improved.

In accordance with the present invention, a strip having smaller width can be used and excess fragments wasted in the conventional preparation can be utilized to improve the efficiency for utilization of the strip for iron cores and the cost for preparation of laminated iron core can be remarkably reduced in comparison with the conventional preparation and a laminated iron core having an outer diameter larger than the width of the strip for iron cores can be obtained.

## Claims

1. Method for preparation of a laminated iron core of an electric device, wherein iron core discs are stamped out of sheet material strip such that said discs are provided with one or more straight edges, characterized in that discs are stamped out of a strip having a width smaller than an outer diameter of said laminated iron core and that crescent-shaped pieces are stamped from excess fragments of said strip and assembled and secured to said iron core discs along said straight edges thereof by applying a fastening force without bonding to form said laminated iron core.

2. Method according to claim 1, characterized in that an iron core ring plate is prepared by stamping said iron disc having a straight edge.

3. Method according to claim 1, characterized in that a pair of straight edges are formed on said iron core disc (fig. 4,5).

4. Method according to claim 1, characterized in that two pairs of straight edges are formed on said iron core disc (fig. 6,7).

5. Method acording to one of claims 1 to 4, characterized in that said crescent-shaped pieces are formed in a half-crescent-shape.

6. A laminated iron core of an electric device comprising iron core discs stamped out of a strip, characterized in that each iron core disc is composed of a ring plate (31; 41) and crescent-shaped pieces (33a, 33b; 43a, 43b) stamped out of an excess fragment (32; 42) of said strip and fixed to said ring plate.

## Patentansprüche

1. Verfahren zur Vorfertigung eines laminierten Eisenkernes für ein elektrisches Gerät, wobei Eisenkernscheiben aus einem Blechmaterialstreifen so ausgestanzt werden, daß die Scheiben eine oder mehrere gerade Kanten haben, dadurch gekennzeichnet daß die Scheiben aus einem Streifen mit einer Breite kleiner als ein Außendurchmesser des laminierten Eisenkernes ausgestanzt werden und daß sichelförmige Stücke aus überschüssigen Abschnitten des Streifens ausgestanzt und mit des Eisenkernscheiben längs deren geraden Kanten durch Aufbringen einer Begestigungskraft ohne Kleben zum Formen des laminierten Eisenkernes zusammengefügt und gesichert werden.

2. Verfahren nach Anspruch 1, dadurch gekennzeichnet, daß eine Eisenkern-Ringplatte durch Ausstanzen der Eisenkernscheibe mit einer geraden Kante erzeugt wird.

3. Verfahren nach Anspruch 1, dadurch gekennzeichnet, daß ein Paar gerade Kanten an der Eisenkernscheibe ausgebildet werden (Fig. 4, 5).

4. Verfahren nach Anspruch 1, dadurch gekennzeichnet, daß zwei Paare gerade Kanten an der Eisenkernscheibe ausgebildet werden (Fig. 6, 7).

5. Verfahren nach einem der Ansprüche 1 bis 4, dadurch gekennzeichnet, daß die sichelförmigen Stücke aus Halb-Sichelstücken geformt werden.

6. Laminierter Eisenkern für ein elektrisches Gerät mit Eisenkernscheiben, die aus einem Streifen ausgestanzt sind, dadurch gekennzeichnet, daß jede Eisenkernscheibe aus einer Ringplatte (31; 41) und sichelförmigen Stücken (33a, 33b; 43a, 43b) zusammengesetzt sind, welche aus einem überschüssigen Abschnitt (32; 42) des Streifens ausgestanzt und an der Ringplatte befestigt sind.

## Revendications

1. Procédé pour préparer un noyau de fer feuilleté pour un dispositif électrique, selon lequel on forme des disques de noyau de fer par estampage d'une bande de matériau en feuille de telle façon que lesdits disques soient munis d'un ou de plusieurs bords rectilignes, caractérisé en ce que l'on forme lesdits disques par estampage d'une bande possédant une largeur inférieure à un diamètre extérieur dudit noyau de fer feuilleté et en ce que l'on produit par estampage des pièces en forme de croissants à partir des chutes de ladite bande, puis on les assemble et on les fixe auxdits disques de noyau de fer le long desdits bords rectilignes de ceux-ci, par application d'une force de blocage, sans autre moyen de liaison, de manière à former ledit noyau de fer feuilleté.

2. Procédé selon la revendication 1, caractérisé en ce que l'on prépare une tôle annulaire pour le noyau de fer par estampage dudit disque en fer possédant un bord rectiligne.

3. Procédé selon la revendication 1, caractérisé en ce que l'on forme deux bords rectilignes sur ledit disque de noyau de fer (figures 4, 5).

4. Procédé selon la revendication 1, caractérisé en ce que l'on forme deux groupes de deux bords rectilignes sur ledit disque de noyau de fer (figures 6, 7).

5. Procédé selon l'une des revendications 1 à 4, caractérisé en ce que l'on réalise lesdites pièces en forme de croissants à partir de pièces en forme de demi-croissants.

6. Noyau de fer feuilleté pour un dispositif électrique, comportant des disques de noyau de fer produits par estampage d'une bande, caractérisé en ce que chaque disque de noyau de fer est constitué par une tôle annulaire (31; 41) et par des pièces en forme de croissants (33a, 33b; 43a, 43b) produites par estampage d'une chute (32; 42) de ladite bande et fixées à ladite tôle annulaire.

# Fig. 1

# Fig. 4

# Fig. 5

# Fig. 3

200

100

# Fig. 2

22

22

2

21

$W_2$

k

R

22

22

22

22

21a

# Fig. 6

# Fig. 7